# EUROPEAN PATENT SPECIFICATION

(11) **EP 4 639 917 B1**
(45) Date of publication and mention of the grant of the patent: **25.11.2026**
(21) Application number: 24720990.1
(22) Date of filing: 27.03.2024
(51) Int. Cl.: H04Q 9/00

(54) **METHOD FOR OBTAINING MEASUREMENT DATA FROM A METER**
VERFAHREN ZUR GEWINNUNG VON MESSDATEN AUS EINEM MESSGERÄT
PROCÉDÉ D'OBTENTION DE DONNÉES DE MESURE À PARTIR D'UN COMPTEUR

(30) Priority: 29.03.2023 GB 202304628; 29.03.2023 GB 202304630; 29.03.2023 GB 202304631
(43) Date of publication of application: 29.10.2025
(73) Proprietor: Landis+Gyr Technology, Inc., Alpharetta, GA 30022 (US)
(72) Inventor: MACLAURY, Kyle, Quechee, Vermont 05059 (US)
(74) Representative: Marks & Clerk LLP
(86) International application number: PCT/US2024/021675
(87) International publication number: WO 2024/206441

(56) References cited:
- EP-A2- 2 520 905
- US-A1- 2006 001 414

## Description

### FIELD

The present disclosure relates to a method for obtaining measurement data from a meter for use with utility meters such as smart utility meters and, in particular though not exclusively, for use with electricity, gas or water meters.

### BACKGROUND

Modern electrical meters are capable of supporting 10s of thousands of distinct measurement types. Accurately characterizing and distinguishing each measurement type is a task required of any metrology specification applied to modern meters. Existing metrology specifications such as ANSI C12.19, DLMS/COSEM and IEC 61968-9 each provide methods of specifying and distinguishing many different measurement types.

Current practice in metering systems, and systems persisting metered data is to only expose data types that the meter is configured to calculate and persist or store. There are scenarios, however, where an application running on a meter, or a process in a downstream system such as head end equipment, would benefit from access to data values of a data type that are not persisted or stored but which are derivable from persisted or stored data values. In addition, most calculated data values are determined and transmitted over the metering network in the hours following midnight.

This creates a large bolus of network traffic which must be managed. A prior art metering system is disclosed by EP2520905.

### SUMMARY

According to a claimed aspect of the present disclosure there is provided a method for obtaining measurement data from a meter, the method comprising:
using the meter to measure raw data at one or more measurement locations around a system;
receiving a request for measurement data;
determining whether the measurement data are derivable from the raw data based on a known measurement functionality of the meter; and
in response to determining that the requested measurement data are derivable from the raw data, generating the requested measurement data from the raw data.

Such a method may eliminate the need to transmit measurement data over a network from the meter to head end equipment at predetermined times or intervals. Such a method may also allow measurement data to be obtained of any data type that can be derived from the raw data measured by the meter in response to a request. In particular, such a method does not require pre-calculation of measurement data of all of the data types supported by the meter.

Wherein the known measurement functionality of the meter comprises a plurality of different measurement types, wherein each measurement type comprises a corresponding data type defining a corresponding transformation for generating the measurement data from the raw data.

Wherein each transformation comprises a corresponding initial aggregation operation and one or more corresponding functions, wherein the initial aggregation operation is performed on the raw data to generate base data, and wherein the one or more corresponding functions operate on the base data to generate the measurement data.

Optionally, the plurality of initial aggregation operations corresponding to the plurality of measurement types are stored in a memory of the meter.

Optionally, generating the requested measurement data from the raw data comprises:
selecting a measurement type from the plurality of measurement types based on the requested measurement data; and
performing, at the meter, the initial aggregation operation corresponding to the selected measurement type on the raw data to determine the base data.

Optionally, the method comprises storing the base data in the memory of the meter.

Wherein the plurality of functions corresponding to the plurality of measurement types are stored in a memory of the meter.

Optionally, generating the requested measurement data from the raw data comprises:
using the one or more functions corresponding to the selected measurement type to derive, at the meter, the measurement data from the base data; and
transmitting the derived measurement data from the meter to head end equipment located remotely from the meter.

Such a method may avoid any requirement to transmit the base data from the meter to the head end equipment at predetermined times or intervals.

Optionally, the plurality of functions corresponding to the plurality of measurement types are stored in a memory of head end equipment located remotely from the meter.

Optionally, generating the requested measurement data from the raw data comprises:
transmitting the base data to head end equipment located remotely from the meter;
using the one or more functions corresponding to the selected measurement type to derive, at the head end equipment, the requested measurement data from the base data.

Such a method may avoid any requirement to derive, at the meter, the requested measurement data from the base data using the one or more functions corresponding to the selected measurement type.

Optionally, the method comprises storing the base data in the memory of the head end equipment.

Optionally, the method comprises publicizing or indicating to a user of the meter and/or of the head end equipment the plurality of different measurement types of the known measurement functionality of the meter to allow the user to select which measurement type should be used to derive the measurement data from the raw data measured by the meter.

Optionally, the measurement functionality of the meter comprises a plurality of different measurement types supported by the meter, each measurement type comprising a corresponding measurement point, a corresponding unit of measure, a corresponding data type, and a corresponding measurement type name, wherein the corresponding measurement point defines the corresponding measurement location, the corresponding unit of measure defines the corresponding unit of measure for the measurement data, and the corresponding data type defines a corresponding transformation for generating the measurement data from the raw data, and wherein the corresponding measurement type name is composed from a name associated with the corresponding measurement point, a name associated with the corresponding unit of measure, and a name associated with the corresponding data type.

Optionally, receiving the request for measurement data comprises receiving a request for measurement data of a desired measurement type name.

Optionally, determining whether the measurement data are derivable from the raw data based on the known measurement functionality of the meter comprises comparing the desired measurement type name with each measurement type name of the plurality of measurement type names, and determining that the measurement data are derivable from the raw data in response to determining that the desired measurement type name matches one of the measurement type names.

Optionally, the measurement functionality of the meter comprises a plurality of different codes of a metrology specification, each code composed from the values of code attributes associated with the corresponding measurement point, the corresponding unit of measure, and the corresponding data type.

Optionally, receiving the request for measurement data comprises receiving a request for measurement data of a desired metrology specification code.

Optionally, determining whether the measurement data are derivable from the raw data based on a known measurement functionality of the meter comprises comparing the desired metrology specification code with each metrology specification code of the plurality of metrology specification codes, and determining that the measurement data are derivable from the raw data in response to determining that the desired metrology specification code matches one of the metrology specification codes.

Optionally, the metrology specification is the IEC 61968-9 metrology specification and the code of the metrology specification is a reading type code defined according to the IEC 61968-9 metrology specification,
Optionally, the metrology specification is the ANSI C12.19 metrology specification and the code of the metrology specification is a code defined according to a relational table structure of the ANSI C12.19 metrology specification, or
Optionally, the metrology specification is the COSEM metrology specification and the code of the metrology specification is a class and/or a parameter defined according to the COSEM metrology specification.

Optionally, the initial aggregation operation comprises averaging the raw data over an aggregation time interval.

Optionally, the initial aggregation operation comprises integrating the raw data over an aggregation time interval.

Optionally, the initial aggregation operation comprises selecting an instantaneous raw data value, for example an instantaneous raw data value at the end of an aggregation time interval.

Optionally, the initial aggregation operation comprises determining a count of events derived from the raw data over an aggregation time interval.

Optionally, the raw data comprises raw time-series data, the base data comprises base time-series data, and the measurement data comprises measurement time-series data.

Optionally, the raw time-series data comprises one or more arrays of raw time-value pairs, the base time-series data comprises one or more arrays of base time-value pairs, and the measurement time-series data comprises one or more arrays of measurement time-value pairs.

Optionally, each of the one or more functions which operate on the base data to generate the measurement data comprises a time-series function.

Optionally, the meter is configured to meter, and optionally also to control, the flow of electricity, gas, water or sewage.

According to an aspect of the present disclosure there is provided a method for use in defining a measurement type supported by a meter, wherein the meter is configured for measuring raw data at a measurement location of a system, wherein the measurement type defines the characteristics of measurement data which is derivable from the raw data, and wherein the method comprises:
defining a measurement type comprising a measurement point, a unit of measure, a data type, and a measurement type name,
wherein the measurement point defines the measurement location,
wherein the unit of measure defines the unit of measure for the measurement data,
wherein the data type defines a transformation for generating the measurement data from the raw data, and
wherein the measurement type name is composed from a name associated with the measurement point, a name associated with the unit of measure, and a name associated with the data type.

Such a method may be used to define the data type of any measurement type supported by the meter unambiguously in terms of the transformation.

Optionally, the transformation defines an initial aggregation operation and one or more functions, wherein the initial aggregation operation is performed on the raw data to form base data, and wherein the one or more functions operate on the base data to generate the measurement data.

Optionally, the meter is configured to perform the initial aggregation operation on the raw data, for example by signal processing of the raw data.

Optionally, the initial aggregation operation comprises averaging the raw data over an aggregation time interval.

Optionally, the initial aggregation operation comprises integrating the raw data over an aggregation time interval.

Optionally, the initial aggregation operation comprises selecting an instantaneous raw data value, for example an instantaneous raw data value at the end of an aggregation time interval.

Optionally, the initial aggregation operation comprises determining a count of events derived from the raw data over an aggregation time interval.

Optionally, the raw data comprises raw time-series data, the base data comprises base time-series data, and the measurement data comprises measurement time-series data.

Optionally, the raw time-series data comprises one or more arrays of raw time-value pairs, the base time-series data comprises one or more arrays of base time-value pairs, and the measurement time-series data comprises one or more arrays of measurement time-value pairs.

Optionally, each of the one or more functions which operate on the base data to generate the measurement data comprises a time-series function. Time-series functions are mathematical operations performed on time-series data, which may comprise a list or an array of time-value pairs. In reality, electrical meters operate on data continuously. However, if a time-series function is applied to raw time-series data measured by the meter, the mathematical result would be the same. Thus, it should be understood that such a method treats the raw time-series data measured by the meter as a time-series object upon which the one or more time-series functions can be applied. Such a method enables the data type supported by the meter to be specified by identifying or specifying the initial aggregation operation performed by the meter to generate the base time-series data, and by specifying the one or more time-series functions performed upon the base time-series data to generate the measurement time-series data.

Optionally, the method comprises defining a code of a metrology specification corresponding to the measurement type wherein the code of the metrology specification is composed from values of code attributes associated with the measurement point, the unit of measure, and the data type.

Optionally, the metrology specification is the IEC 61968-9 metrology specification and the code of the metrology specification is a reading type code defined according to the IEC 61968-9 metrology specification.

Optionally, the metrology specification is the ANSI C12.19 metrology specification and the code of the metrology specification is a code defined according to a relational table structure of the ANSI C12.19 metrology specification.

Optionally, the metrology specification is the COSEM metrology specification and the code of the metrology specification is a class and/or a parameter defined according to the COSEM metrology specification.

According to an aspect of the present disclosure there is provided a method for obtaining measurement data from raw data measured by a meter, the method comprising:
the method for use in defining a measurement type supported by a meter as described above;
receiving a request for measurement data of the measurement type name and/or of a metrology specification code; and
deriving, in response to the request, the measurement data from the raw data according to the transformation defined by the data type corresponding to the measurement type name and/or corresponding to the metrology specification code.

Optionally, deriving the measurement data from the raw data comprises performing an initial aggregation operation on the raw data to form base data and applying one or more functions to the base data to generate the measurement data, wherein the one or more functions are defined according to the transformation defined by the data type.

Optionally, the meter is configured to perform the initial aggregation operation on the raw data, for example by signal processing of the raw data.

Optionally, the method comprises:
performing, at the meter, the initial aggregation operation on the raw data measured by the meter to determine, at the meter, the base data;
using the one or more functions to derive, at the meter, the measurement data from the base data; and
transmitting the derived measurement data from the meter to head end equipment located remotely from the meter.

Optionally, the one or more functions are stored in a memory of the meter.

Optionally, the method comprises:
performing, at the meter, the initial aggregation operation on the raw data measured by the meter to determine, at the meter, the base data;
transmitting the base data from the meter to head end equipment located remotely from the meter; and
using the one or more functions to derive, at the head end equipment, the measurement data from the base data.

Optionally, the one or more functions are stored in a memory of the head end equipment.

According to an aspect of the present disclosure there is provided a method for defining the measurement functionality of a meter, the method comprising defining a plurality of different measurement types supported by a meter, wherein each measurement type of the plurality of different measurement types is defined according to the method as described above.

According to an aspect of the present disclosure there is provided a measurement type data object for defining a measurement type supported by a meter, wherein the meter is configured for measuring raw data at a measurement location of a system, wherein the measurement type defines the characteristics of measurement data which is derivable from the raw data, and wherein the measurement type data object comprises:
a measurement point;
a unit of measure;
a data type; and
a measurement type name composed from a name associated with the measurement point, a name associated with the unit of measure, and a name associated with the data type,
wherein the measurement point defines the measurement location, the unit of measure defines the unit of measure for the measurement data, and the data type defines a transformation for generating the measurement data from the raw data.

Optionally, the meter is configured to meter, and optionally also to control, the flow of electricity, gas, water or sewage.

It should be understood that any one or more of the optional features of any one of the foregoing aspects of the present disclosure may be combined with any one or more of the optional features of any of the other foregoing aspects of the present disclosure.

### BRIEF DESCRIPTION OF THE DRAWINGS

A method for obtaining measurement data from a meter will now be described by way of non-limiting example only with reference to the drawings of which:
FIG. 1 is a schematic of a metering system;
FIG. 2 is a flow chart illustrating a method for use in determining the measurement functionality of a meter;
FIG. 3 is a flow chart illustrating the method for use in determining the measurement functionality of a meter of FIG. 2 in more detail;
FIG. 4A is a causal graph depicting a data type transformation which transforms base time-series data called "averageBase" to intermediate time-series data called "meanAggregatelnterval" and the transformation of the intermediate time-series data "meanAggregatelnterval" to the measurement time-series data called "maxAggregateMacroPeriod";
FIG. 4B is a plot of the base time-series data "averageBase" of FIG. 4A;
FIG. 4C is a plot of the intermediate time-series data "meanAggregatelnterval" of FIG. 4A;
FIG. 4D is a plot of the measurement time-series data "maxAggregateMacroPeriod" of FIG. 4A;
FIG. 5 is a causal graph depicting a first alternative data type transformation;
FIG. 6 is a causal graph depicting a second alternative data type transformation;
FIG. 7 is a causal graph depicting a third alternative data type transformation;
FIG. 8 is a causal graph depicting a fourth alternative data type transformation;
FIG. 9A shows an example set of measurement points for an electricity meter and the corresponding value of the cimPhases attribute of the cim code of the IEC 61968-9 metrology specification;
FIG. 9B shows a plurality of different measurement point groups, each measurement point group including a different selection of one or more of the measurement points of the set of measurement points of FIG. 9A;
FIG. 10A shows a first part of an example set of units of measure for an electricity meter and the values of the corresponding cim code attributes of the IEC 61968-9 metrology specification;
FIG. 10B shows a second part of the example set of units of measure of FIG. 10A;
FIG. 11A shows a first part of an example set of data types for an electricity meter and the values of the corresponding cim code attributes of the IEC 61968-9 metrology specification;
FIG. 11B shows a second part of the example set of data types of FIG. 11A;
FIG. 12 shows a set of different class/group combinations of measurement point group (like those discussed with reference to FIG. 9B), unit of measure class (like those discussed with reference to FIGS. 10A and 10B), and data type class (like those discussed with reference to FIGS. 11A and 11B);
FIG. 13A is a screenshot of a first part of a Wolfram language environment during the execution of a Wolfram language script for the "maximumMacro" class/group combination of FIG. 12;
FIG. 13B is a screenshot of a second part of a Wolfram language environment during the execution of a Wolfram language script for the "maximumMacro" class/group combination of FIG. 12;
FIG. 13C is a screenshot of a third part of a Wolfram language environment during the execution of a Wolfram language script for the "maximumMacro" class/group combination of FIG. 12;
FIG. 13D is a screenshot of a fourth part of a Wolfram language environment during the execution of a Wolfram language script for the "maximumMacro" class/group combination of FIG. 12; and
FIG. 14 shows a selection of the measurement type names and cim codes corresponding to the "maximumMacro" class/group combination of FIG. 12.

### DETAILED DESCRIPTION OF THE DRAWINGS

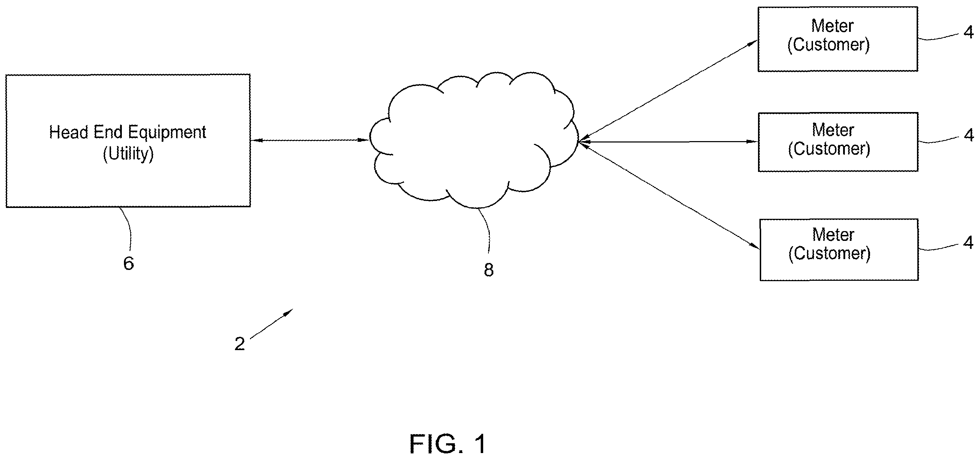

Referring initially to FIG. 1 there is shown a metering system generally designated 2 including a plurality of meters 4 and head end equipment generally designated 6. The plurality of meters 4 and the head end equipment 6 are configured to communicate across a network 8, which may be wired and/or wireless. In the specific example of the metering system 2 of FIG. 1, the metering system 2 may be configured to meter, and possibly also control, the flow of electricity. It should be understood that, in other embodiments, the metering system 2 may be configured to meter, and possibly also control, the flow of any utility, such as gas, water, sewage or the like. The meters 4 may be the same or different.

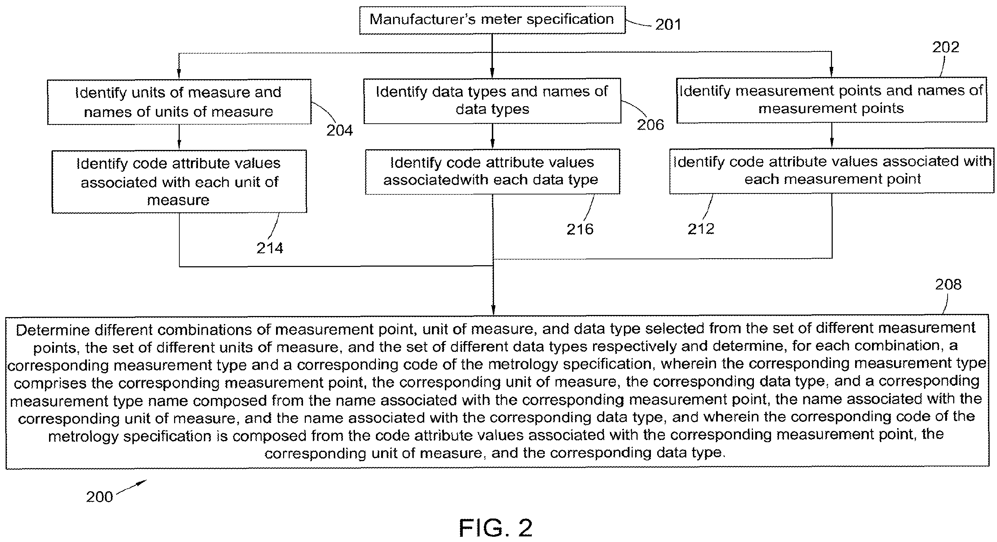

Referring to FIG. 2 there is a shown a method generally designated 200 for use in determining the measurement functionality of any one of the meters 4, wherein the meter 4 is configured for measuring raw data at one or more measurement locations around a system and wherein the measurement functionality of the meter 4 defines the characteristics of measurement data which is derivable from the raw data. The method 200 includes:
identifying 202 a set of different measurement points supported by the meter 4, each measurement point defining the one or more measurement locations, and identifying or defining a corresponding name for each measurement point of the set of different measurement points;
identifying 204 a set of different units of measure supported by the meter 4, each unit of measure defining the unit of measure for the measurement data, and identifying or defining a corresponding name for each unit of measure of the set of different units of measure;
identifying 206 a set of different data types supported by the meter 4, each data type defining a transformation for generating the measurement data from the raw data, and identifying or defining a corresponding name for each data type of the set of different data types;
identifying 212, for each measurement point, a corresponding value of each of one or more attributes of a code of a metrology specification;
identifying 214, for each unit of measure, a corresponding value of each of one or more attributes of the code;
identifying 216, for each data type, a corresponding value of each of one or more attributes of the code; and
determining 208 different combinations of measurement point, unit of measure, and data type selected from the set of different measurement points, the set of different units of measure, and the set of different data types respectively and determining, for each combination, a corresponding measurement type and a corresponding code of the metrology specification, wherein the measurement type comprises the corresponding measurement point, the corresponding unit of measure, the corresponding data type, and a corresponding measurement type name composed from the name associated with the corresponding measurement point, the name associated with the corresponding unit of measure, and the name associated with the corresponding data type, and wherein the corresponding code of the metrology specification is composed from the code attribute values associated with the corresponding measurement point, the corresponding unit of measure, and the corresponding data type.

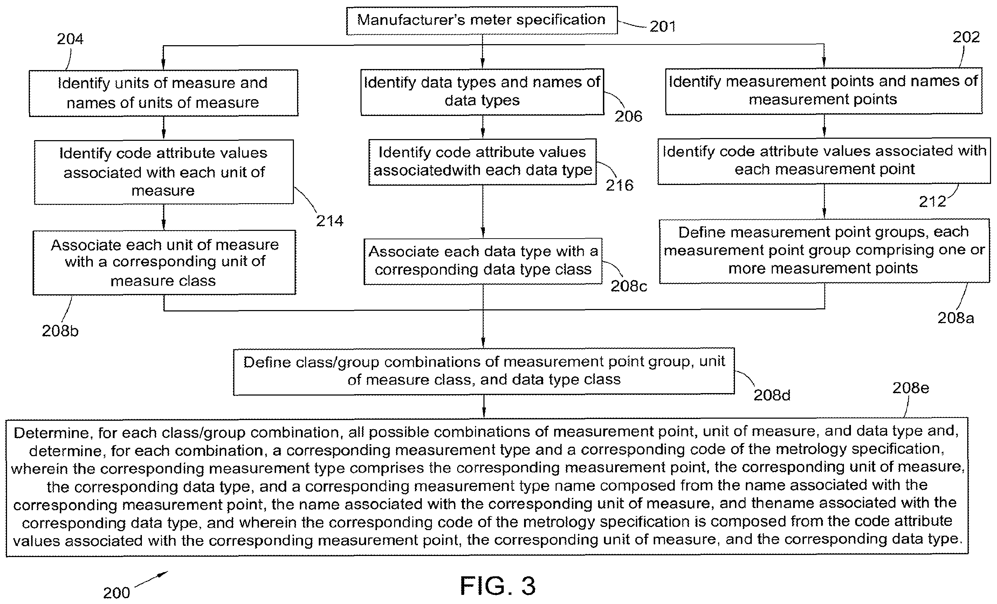

As shown in more detail in FIG. 3, determining 208 the different combinations of measurement point, unit of measure, and data type comprises:
defining 208a a set of different measurement point groups, each measurement point group including a different selection of one or more of the measurement points of the set of different measurement points;
associating 208b each unit of measure of the set of different units of measure with a corresponding unit of measure class;
associating 208c each data type of the set of different data types with a corresponding data type class;
defining 208d a set of different class/group combinations, each different class/group combination comprising a different combination of measurement point group, unit of measure class, and data type class; and
determining 208e, for each class/group combination of the set of different class/group combinations, all possible combinations of: i) the measurement points associated with the class/group combination; ii) the units of measure associated with the class/group combination; and iii) the data types associated with the class/group combination and, determining, for each combination, a corresponding measurement type and a corresponding code of the metrology specification, wherein the measurement type comprises the corresponding measurement point, the corresponding unit of measure, the corresponding data type, and a corresponding measurement type name composed from the name associated with the corresponding measurement point, the name associated with the corresponding unit of measure, and the name associated with the corresponding data type, and wherein the corresponding code of the metrology specification is composed from the code attribute values associated with the corresponding measurement point, the corresponding unit of measure, and the corresponding data type.

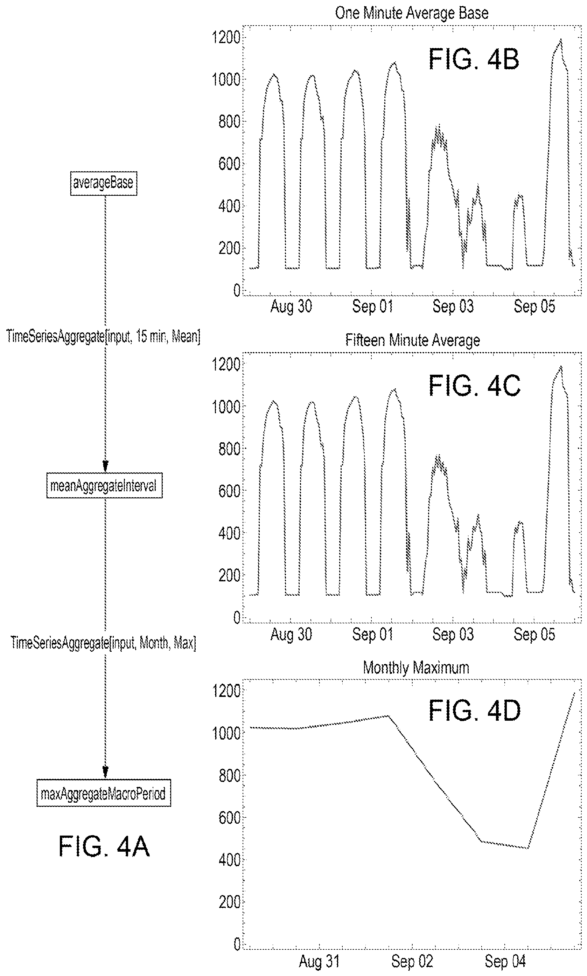

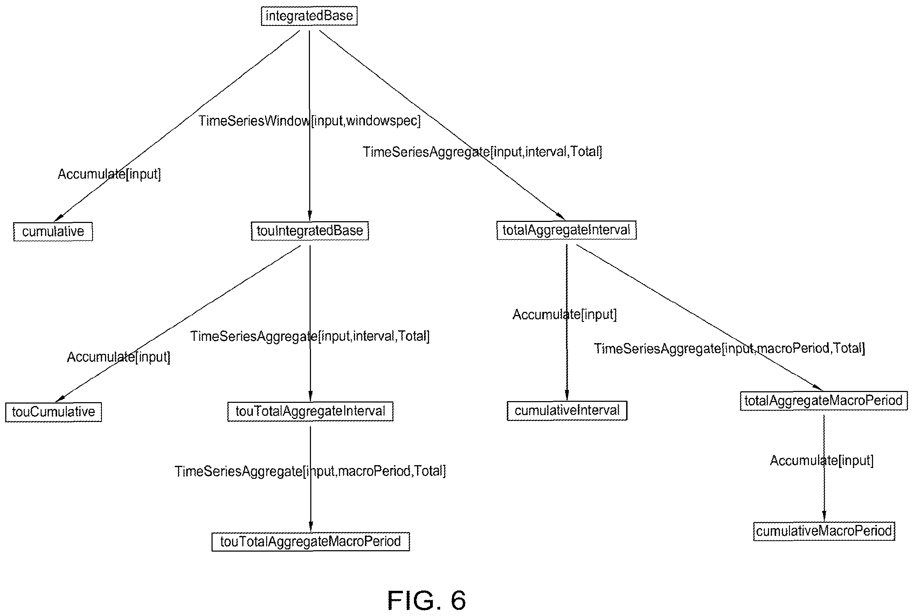

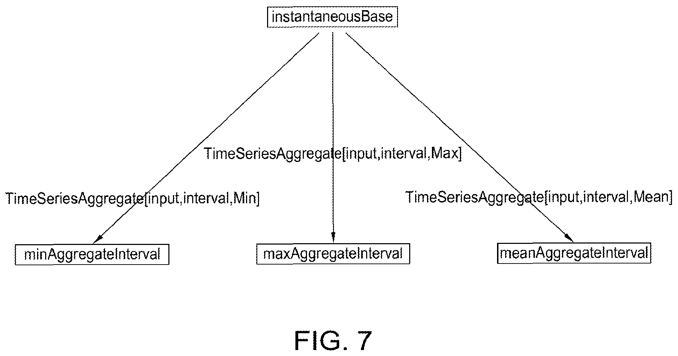

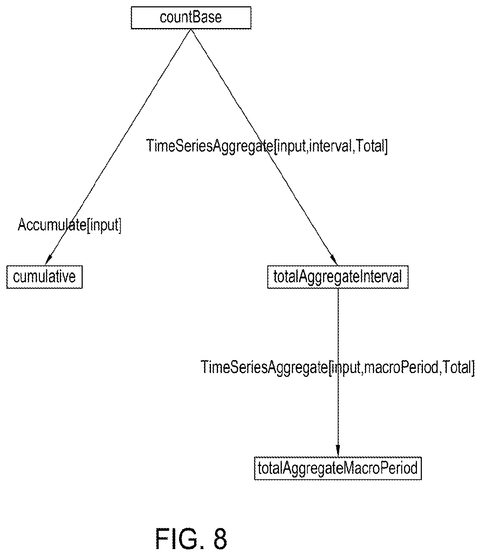

The steps of the second method 200 will now be described in more detail below with reference to FIGS. 4A to 14 for the specific case of an electricity meter with reference to the reading type codes or cim codes of the IEC 61968-9 metrology specification.

FIG. 4A illustrates how the data type defines a transformation for generating the measurement data from the raw data. Each meter 4 performs initial signal processing on the raw data to generate base data. Specifically, the raw data measured by any one of the meters 4 comprises raw time-series data (i.e. an array of raw time-value pairs upon which time series functions can be applied) and each meter 4 performs initial signal processing on the raw time-series data to generate base time-series data. In general, the base data represents a first aggregation of the raw data. The interval used for aggregation of the raw data to generate the base data may differ across systems, so it is unspecified. There are several types of base data which are defined by the initial signal processing performed by the meter 4. The base data may represent an average of sampled values over the interval, the integral of sampled values over the interval, an instantaneous measurement (often the sample at the end of the interval), or a count of events over the interval. These different types of base data are treated independently because different time-series functions are applicable for each type.

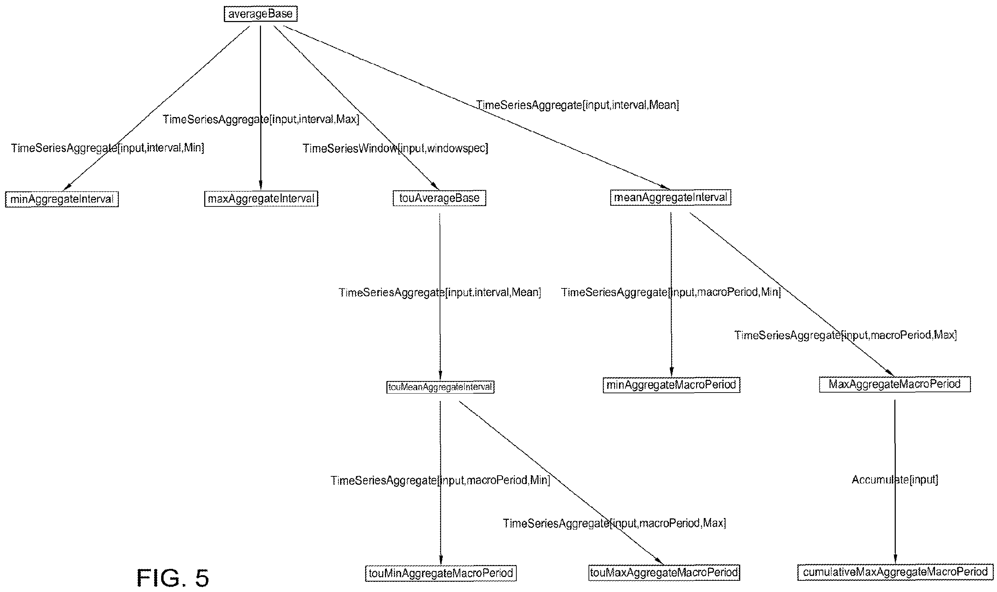

The data type defines a time-series function, or a sequence of time-series functions, which is/are applied to the base time-series data to generate the measurement time-series data. For example, FIGS. 4A-4D illustrate the transformation defined by the data type from base time-series data comprising average values at one minute intervals. The base time-series data is first transformed to intermediate time-series data comprising average values averaged over 15-minute intervals, and then transformed to monthly maximum measurement time series data. More specifically, FIG. 4A is a causal graph which depicts the transformation of one minute average base time-series data called "averageBase" shown in FIG. 4B to fifteen minute average intermediate time-series data called "meanAggregatelnterval" shown in FIG. 4C using a first time-series function "TimeSeriesAggregate[input, 15 min, Mean]" and the transformation of the intermediate time-series data "meanAggregatelnterval" to the monthly maximum measurement time-series data called "maxAggregateMacroPeriod" shown in FIG. 4D using a second time-series function "TimeSeriesAggregate[input, Month, Max]". Thus, in order to specify the data types supported by a given meter 4, it is necessary to identify the base time-series data generated by the meter 4, and to specify the transformations performed upon the base time-series data. FIGS. 5, 6, 7 and 8 show four alternative causal graphs illustrating the associated transformations for average, integrated, instantaneous and count base time-series data respectively. It should be understood that the causal graphs of FIGS. 4A, 5, 6, 7 and 8 are not exhaustive, but that they represent some of the most common data types supported by meters 4.

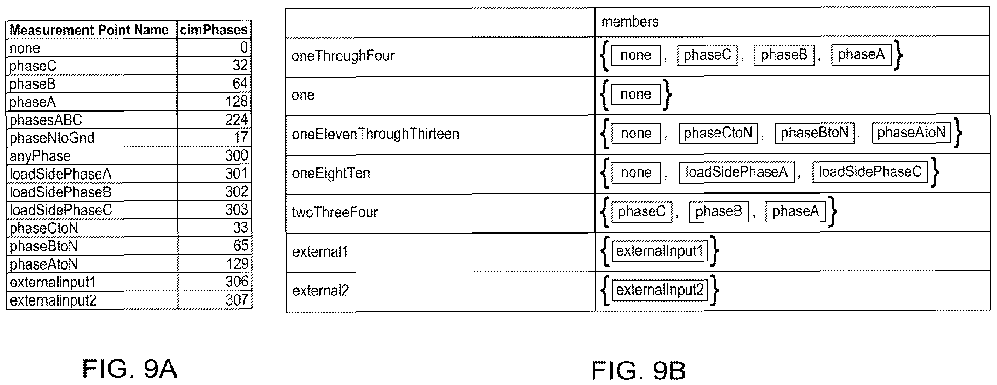

Referring now to FIG. 9A there is shown an example set of different measurement points for an electricity meter and the corresponding value of the cimPhases attribute of the cim code of the IEC 61968-9 metrology specification. It should be understood that the different measurement points in FIG. 9A are derived from the meter manufacturer's specification. However, neither the cim code attribute nor its value is specified in the meter manufacturer's specification. Consequently, the cim code attribute and its value are derived from the units of measure specified in the meter manufacturer's specification using engineering knowledge. It should also be understood that the different measurement points shown in FIG. 9A are not necessarily exhaustive. FIG. 9B shows a plurality of different measurement point groups, each measurement point group including a different selection of one or more of the measurement points of the set of different measurement points of FIG. 9A. It should be understood that each measurement point group is defined using engineering knowledge and represents a common group of measurement locations encountered for an electrical distribution system. It should also be understood that the different measurement point groups shown in FIG. 9B are not necessarily exhaustive.

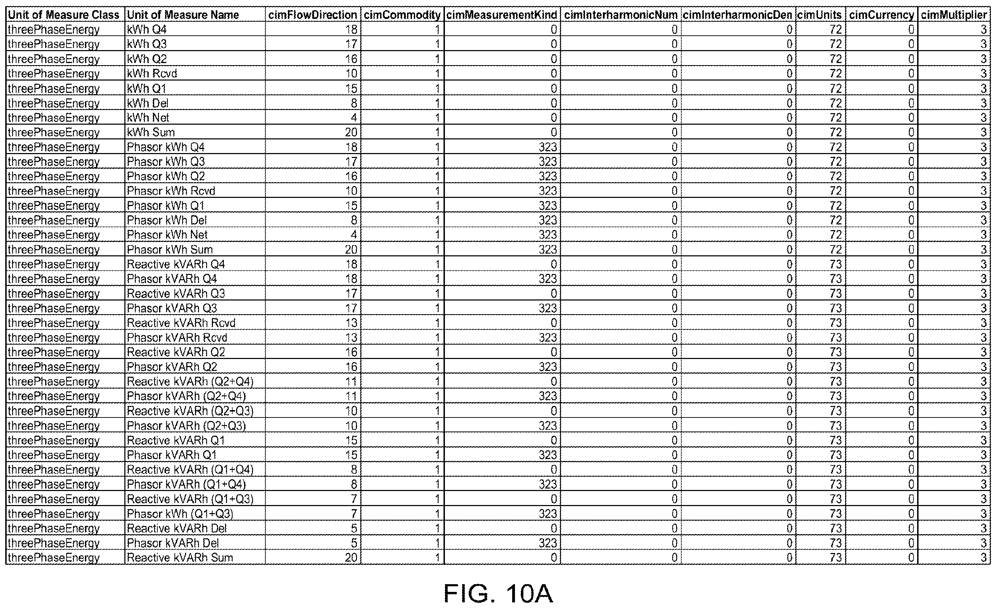

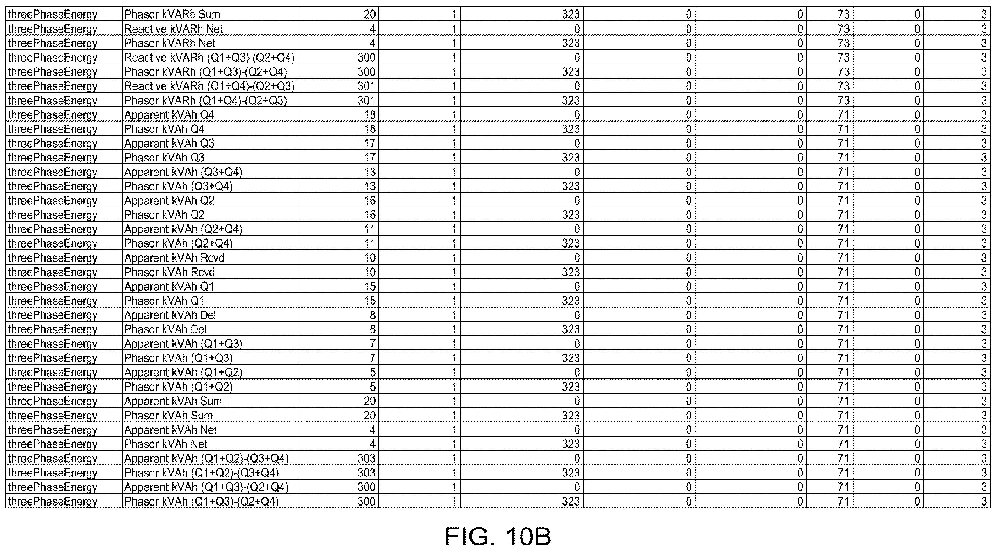

Referring now to FIGS. 10A and 10B there is shown an example set of different units of measure for an electricity meter and the values of the corresponding cim code attributes of the IEC 61968-9 metrology specification. It should be understood that the different units of measure in FIGS. 10A and 10B are derived from the meter manufacturer's specification. However, neither the cim code attributes nor their values are specified in the meter manufacturer's specification. Consequently, the cim code attributes and their values are derived from the units of measure specified in the meter manufacturer's specification using engineering knowledge. It should also be understood that the different units of measure shown in FIGS. 10A and 10B are not exhaustive. It should also be understood that each unit of measure is assigned to a corresponding unit of measure class using engineering knowledge. For example, in FIGS. 10A and 10B, all of the units of measure are assigned to the unit of measure class "threePhaseEnergy". It should be understood that each unit of measure class is defined using engineering knowledge and that all of the units of measure relating to the same unit of measure class are closely related. It should also be understood that although all of the units of measure in FIGS. 10A and 10B are assigned to the unit of measure class "threePhaseEnergy", in reality, the example set of different units of measure may include many more units of measure than those shown in FIGS. 10A and 10B and that different units of measure may be assigned to different unit of measure classes. In particular, units of measure may be assigned to unit of measure classes including "threePhaseEnergy", "threePhasePower", "calculatedNetEnergy", "demandTimestamp", "powerFactor" etc.

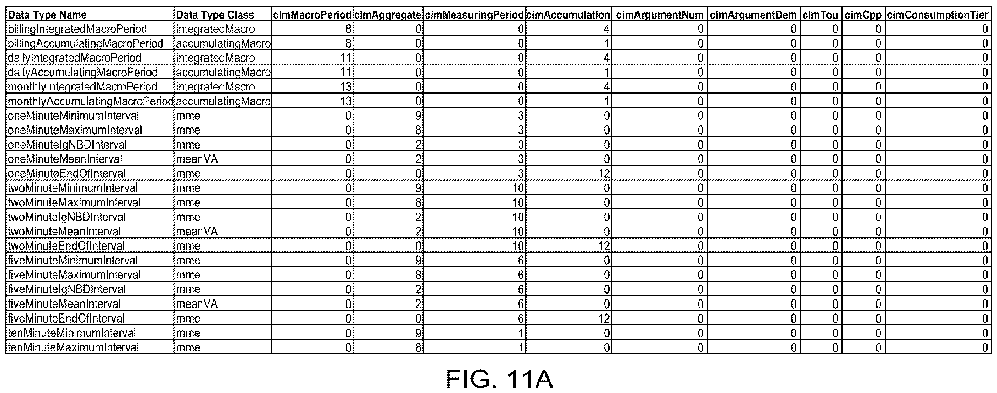

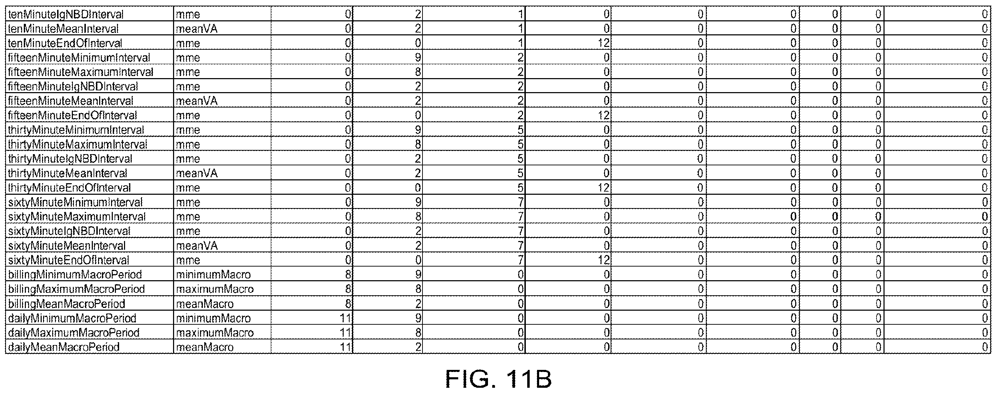

Referring now to FIGS. 11A and 11B there is shown an example set of different data types for an electricity meter and the values of the corresponding cim code attributes of the IEC 61968-9 metrology specification. It should be understood that the different data types in FIGS. 11A and 11B are derived from the meter manufacturer's specification. However, neither the cim code attributes nor their values are specified in the meter manufacturer's specification. Consequently, the cim code attributes and their values are derived from the data types specified in the meter manufacturer's specification using engineering knowledge. It should also be understood that the different data types shown in FIGS. 11A and 11B are not exhaustive. It should also be understood that each data type is assigned to a corresponding data type class using engineering knowledge. For example, in FIGS. 11A and 11B, the data types are assigned to different data type classes including "integratedMacro", "accumlutatingMacro", "mme", "meanVA", "minimumMacro", "maximumMacro" and "meanMacro". It should be understood that each data type class is defined using engineering knowledge and that all of the data types relating to the same data type class are closely related.

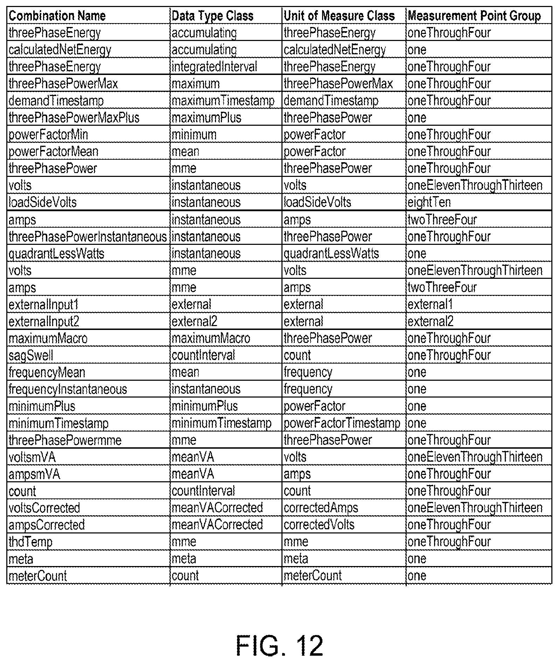

Referring now to FIG. 12 there is shown a set of different class/group combinations of measurement point group (like those discussed with reference to FIG. 9B), unit of measure class (like those discussed with reference to FIGS. 10A and 10B), and data type class (like those discussed with reference to FIGS. 11A and 11B). It should be understood that the different class/group combinations shown in FIG. 12 are derived from engineering knowledge of the operation of electricity meters at step 208d of the method 200 of FIG. 3. It should also be understood that the set of different class/group combinations shown in FIG. 12 are not necessarily exhaustive.

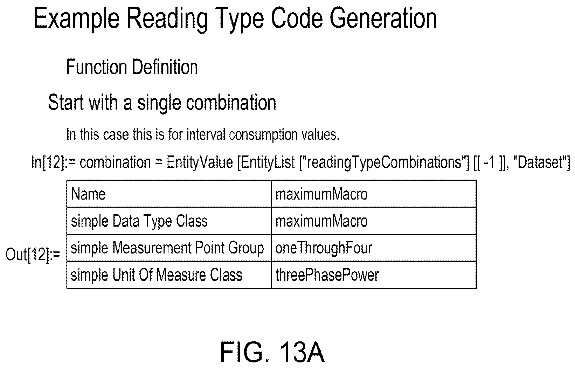

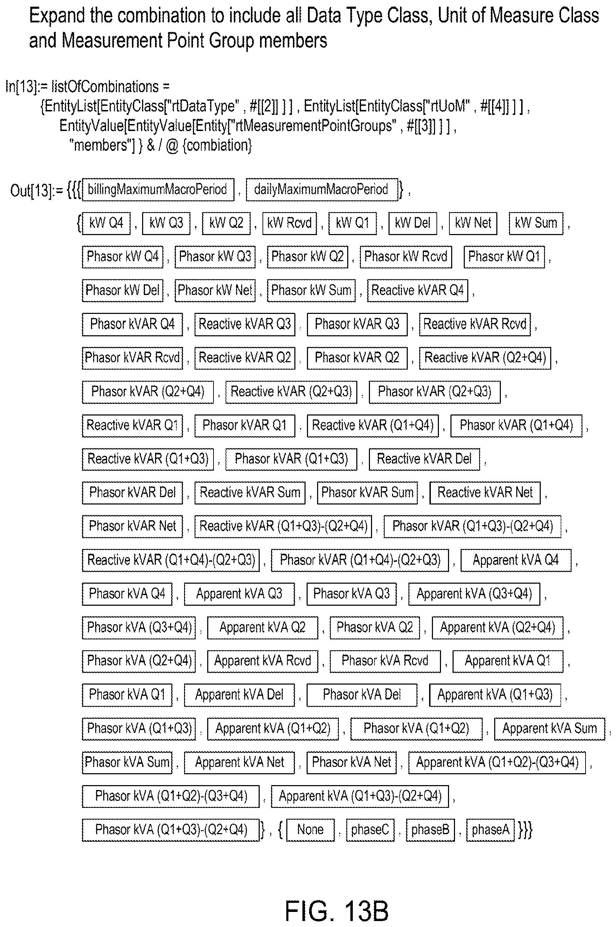

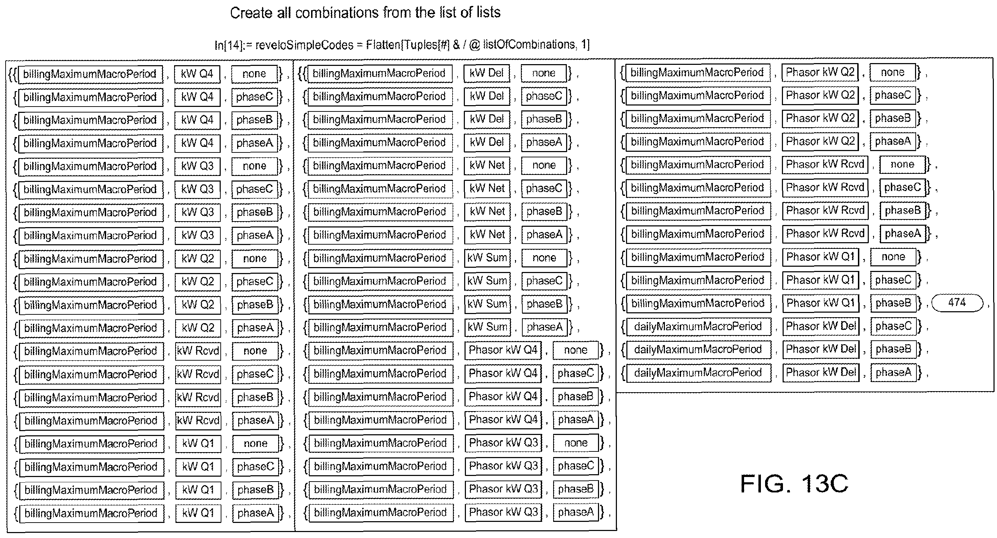

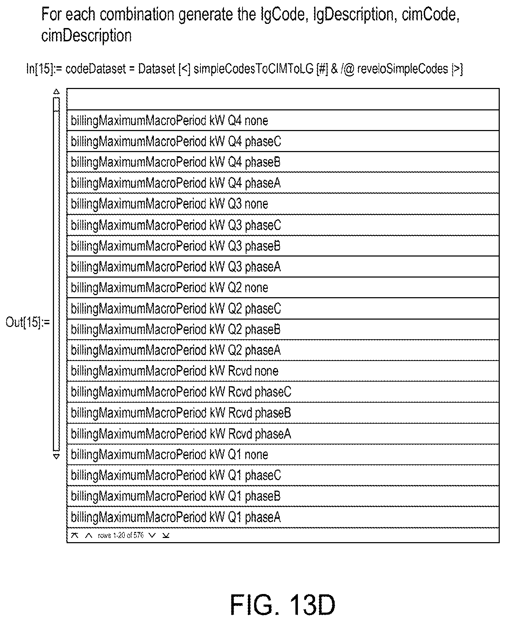

FIGS. 13A-13D are screenshots of different parts of a Wolfram language environment during the execution of a Wolfram language script for the case of a single one of the class/group combinations from FIG. 12 called "maximumMacro" which corresponds to a combination of a measurement point group of "oneThroughFour", a unit of measure class of "threePhasePower" and a data type class of "maximumMacro". The different measurement points and their corresponding cim codes corresponding to measurement point group "oneThroughFour", the different units of measure and their corresponding cim codes corresponding to unit of measure class "threePhasePower", and the different data types and their corresponding cim codes corresponding to data type class "maximumMacro" are read into the Wolfram language environment as shown in Fig. 13A. All of the different members of the "maximumMacro" data type class, the "threePhasePower" unit of measure class, and the "oneThroughFour" measurement point group are listed as shown in FIG. 13B. All possible combinations of the different measurement points and their corresponding cim codes corresponding to measurement point group "oneThroughFour", the different units of measure and their corresponding cim codes corresponding to unit of measure class "threePhasePower", and the different data types and their corresponding cim codes corresponding to data type class "maximumMacro" are then generated. The possible combinations of the different measurement points corresponding to measurement point group "oneThroughFour", the different units of measure corresponding to unit of measure class "threePhasePower", and the different data types corresponding to data type class "maximumMacro" are shown in Fig. 13C. As shown at FIG. 13D, for each combination of measurement point, unit of measure, and data type class, measurement type names are then generated or constructed from the name associated with the corresponding measurement point, the name associated with the corresponding unit of measure, and the name associated with the corresponding data type.

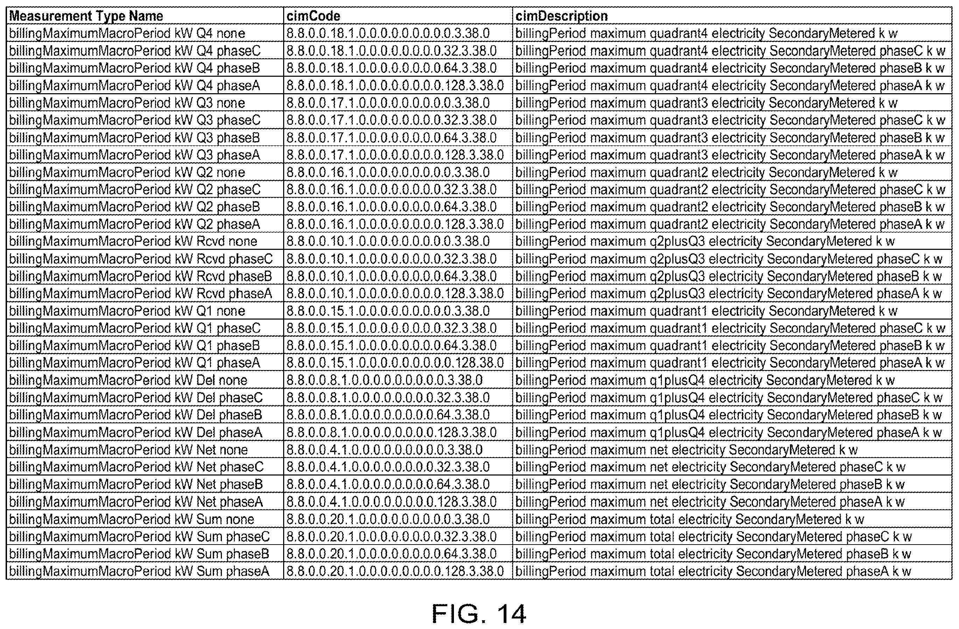

The measurement type names and cim codes for each combination of the different measurement points corresponding to measurement point group "oneThroughFour", the different units of measure corresponding to unit of measure class "threePhasePower", and the different data types corresponding to data type class "maximumMacro" corresponding to the "maximumMacro" class/group combination are then stored. FIG. 14 shows a small selection of the measurement type names and cim codes for each combination of the different measurement points corresponding to measurement point group "oneThroughFour", the different units of measure corresponding to unit of measure class "threePhasePower", and the different data types corresponding to data type class "maximumMacro" corresponding to the "maximumMacro" class/group combination. FIG. 14 also shows the corresponding "cimDescription" for each combination, where the cimDescription is generated by simply transforming the numerical cim code values to their string enumerations as defined by the IEC 61968-9 metrology specification. Accordingly, it should be understood that the measurement type name and the "cimDescription" are equivalent for each combination. It should be understood that FIG. 14 does not show all of the measurement type names and cim codes corresponding to the "maximumMacro" class/group and that there may be several hundred measurement type names and cim codes corresponding to the "maximumMacro" class/group.

The Wolfram language script is then used to generate and store all of the measurement type names and cim codes corresponding to all of the other class/group combinations defined in FIG. 12 so as to define the functionality of the meter 4 and the corresponding set of cim codes.

It should be understood that the method for use in determining the measurement functionality of a meter described above may not only fully define the functionality of the meter than the manufacturer's meter specification, but may also define the corresponding cim code for each measurement type. Moreover, one of ordinary skill in the art will understand that essentially the same method may be used to define the measurement functionality of a meter in terms of codes of a metrology specification other than the IEC 61968-9 metrology specification, for example in terms of codes of the ANSI C12.19 metrology specification, or in terms of codes of the COSEM metrology specification.

Furthermore, the same method may be used to define the corresponding codes for each measurement type for a plurality of metrology specifications such as a plurality of metrology specifications selected from the IEC 61968-9 metrology specification, the ANSI C12.19 metrology specification, and the COSEM metrology specification to thereby allow direct mappings to be created and maintained across different metrology specifications. For example, the method may comprise:
identifying or defining, for each measurement point, a corresponding value for each of one or more attributes of a further code of a further metrology specification;
identifying or defining, for each unit of measure, a corresponding value for each of one or more attributes of a further code of the further metrology specification;
identifying or defining, for each data type, a corresponding value for each of one or more attributes of a further code of the further metrology specification; and
determining, for each combination of measurement point, unit of measure, and data type, the corresponding further code of the further metrology specification composed from the values of the further code attributes associated with the corresponding measurement point, the corresponding unit of measure, and the corresponding data type.

The further metrology specification may be the IEC 61968-9 metrology specification and the further code of the further metrology specification may be a reading type code defined according to the IEC 61968-9 metrology specification.

The further metrology specification may be the ANSI C12.19 metrology specification and the further code of the further metrology specification may be a code defined according to a relational table structure of the ANSI C12.19 metrology specification.

The further metrology specification may be the COSEM metrology specification and the further code of the further metrology specification may be a class and/or a parameter defined according to the COSEM metrology specification.

Such a method may be used for determining inter-operability between a meter 4 and the head end equipment 6, wherein the functionality of the head end equipment 6 is defined using codes of a given metrology specification. For example, for head end equipment 6 having a functionality defined as a plurality of codes of a given metrology specification, a method for use in identifying inter-operability between the head end equipment 6 and the meter 4 of the metering system 2 may comprise:
using the method as described above to determine the codes associated with the measurement functionality of the meter 4 for the same given metrology specification;
comparing the codes associated with the known functionality of the head end equipment 6 and the determined codes associated with the determined measurement functionality of the meter 4; and
determining whether the head end equipment 6 and the meter 4 are inter-operable based on the results of the comparison.

The determined measurement types and/or the determined metrology specification codes may be used to determine whether a desired measurement type is supported by the meter and to obtain measurement data of the desired measurement type from raw data measured by the meter.

For example, a method for obtaining measurement data from raw data measured by a meter may comprise:
receiving a request for measurement data of a desired measurement type name and/or of a desired code of a metrology specification;
determining whether the desired measurement type is supported by the meter by comparing the desired measurement type name with each determined measurement type name of the determined plurality of measurement type names and/or by comparing the desired metrology specification code with each determined metrology specification code of the determined plurality of metrology specification codes; and
responsive to determining that the desired measurement type name matches one of the determined measurement type names and/or that the desired metrology specification code matches one of the determined metrology specification codes, deriving the measurement data from the raw data according to the transformation defined by the data type which corresponds to the determined measurement type name which matches the desired measurement type name and/or according to the transformation defined by the data type which corresponds to the determined metrology specification code which matches the desired metrology specification code.

It should be understood that, when the meter 4 or head end equipment 6 receives a request for a specific measurement type, the measurement data is determined by first performing, at the meter, the initial aggregation operation on the raw data to calculate the base data. As previously described with reference to the examples of the causal graphs of FIGS. 4A, 5, 6, 7 and 8, the sequence of time-series functions that must then be applied to calculate the requested measurement data from the base data is defined by the sequence of time-series functions traversed from the base data vertex of the relevant causal graph to the requested measurement data vertex of the relevant causal graph. As discussed above, the method may fully define the functionality of the meter. Put another way, the method may define all of the measurement types supported by the meter thereby allowing measurement data of all of the measurement types supported by the meter to be derived from raw data measured by the meter.

The meter 4 may use the relevant sequence of time-series functions to derive the measurement data from the base data and the derived measurement data may be transmitted from the meter 4 to the head end equipment 6. This may require the meter 4 to calculate and persist or store the base data and the measurement data, but may avoid any requirement for the meter 4 to transmit the base data to the head end equipment 6.

Alternatively, the base data may be transmitted from the meter 4 to the head end equipment 6, and the head end equipment 6 may use the relevant sequence of time-series functions to derive the measurement data from the base data. This may require the meter 4 to calculate and persist or store the base data and for the base data to be transmitted from the meter 4 to the head end equipment 6, but may avoid any requirement for the meter 4 to derive the measurement data from the base data.

The method may comprise publicizing or indicating to a user of the meter 4 and/or of the head end equipment 6 the determined measurement types to allow the user to select which one or more measurement types should be used to derive the measurement data from the raw data measured by the meter 4.

One of skill in the art will understand that the methods described above may be used to generate a model for defining the measurement functionality of a meter, wherein the meter is configured for measuring raw data at one or more measurement locations around a system, wherein the model defines the characteristics of measurement data which is derivable from the raw data, and wherein the model comprises a plurality of different measurement type data objects, wherein each measurement type data object comprises:
a corresponding measurement point;
a corresponding unit of measure;
a corresponding data type; and
a corresponding measurement type name composed from a name associated with the corresponding measurement point, a name associated with the corresponding unit of measure, and a name associated with the corresponding data type,
wherein the corresponding measurement point defines the corresponding measurement location, the corresponding unit of measure defines the unit of measure for the corresponding measurement data, and the corresponding data type defines a corresponding transformation for generating the corresponding measurement data from the corresponding raw data.

One of ordinary skill in the art will also understand that various modifications are possible to any of the methods described above. For example, although the methods above for use in determining the measurement functionality of a meter are described in the context of a meter 4 and metering system 2 for electricity, one of skill in the art will understand that similar methods may be used for determining the measurement functionality of a meter in the context of a meter 4 and a metering system 2 for any utility, such as gas, water, sewage or the like.

Although several specific initial aggregation operations are described above for determining base data from raw data, the initial aggregation operations described are not necessarily exhaustive and other initial aggregation operations are possible. For example, rather than the base data representing an instantaneous measurement value at the end of an aggregation interval, the base data may represent an instantaneous measurement value at any defined time within the aggregation interval such as at the beginning or at the middle of the aggregation interval.

The different sequences of time-series functions described with reference to FIGS. 4A to 8 are not necessarily exhaustive.

The different measurement points described with reference to FIG. 9A are not necessarily exhaustive. The different measurement point groups described with reference to FIG. 9B are not necessarily exhaustive. The different units of measure described with reference to FIGS. 10A and 10B are not necessarily exhaustive. The different unit of measure classes described with reference to FIGS. 10A and 10B are not necessarily exhaustive. The different data types described with reference to FIGS. 11A and 11B are not necessarily exhaustive. The different data type classes described with reference to FIGS. 11A and 11B are not necessarily exhaustive.

It should be understood that the embodiments of the present disclosure are illustrative only and that the claims are not limited to the embodiments. Those skilled in the art will be able to make modifications to the embodiments of the present disclosure and to contemplate alternatives to the embodiments which fall within the scope of the appended claims. Each feature described above and/or shown in any of the accompanying drawings may be incorporated in any embodiment, whether alone or in any appropriate combination with any other feature described and/or shown in the drawings. In particular, one of ordinary skill in the art will understand that one or more of the features of an embodiment described above and/or shown in any of the accompanying drawings may produce effects or provide advantages when used in isolation from one or more of the other features of the same embodiment and that different combinations of the features are possible other than the specific combinations of the features of the embodiments described above and/or shown in any of the accompanying drawings.

The skilled person will understand that in the preceding description and the appended claims, positional terms such as 'above', 'along', 'side', etc. are made with reference to the accompanying drawings. These terms are used for ease of reference but are not intended to be limiting in nature. These terms are to be understood as referring to an object when in an orientation as shown in the accompanying drawings.

Use of the term "comprising" when used in relation to a feature of an embodiment does not exclude other features or steps. Use of the term "a" or "an" when used in relation to a feature of an embodiment of the present disclosure does not exclude the possibility that the embodiment may include a plurality of such features.

The use of reference signs in the claims should not be construed as limiting the scope of the claims.

## Claims

1. A method for obtaining measurement data from a meter (4), the method comprising:
using the meter to measure raw data at one or more measurement locations around a system (2);
receiving a request for measurement data;
determining whether the measurement data are derivable from the raw data based on a known measurement functionality of the meter; and
in response to determining that the requested measurement data are derivable from the raw data, generating the requested measurement data from the raw data,
wherein the known measurement functionality of the meter comprises a plurality of different measurement types, wherein each measurement type comprises a corresponding data type defining a corresponding transformation for generating the measurement data from the raw data,
wherein each transformation comprises a corresponding initial aggregation operation and one or more corresponding functions, wherein the initial aggregation operation is performed on the raw data to generate base data, and wherein the one or more corresponding functions operate on the base data to generate the measurement data, and
**characterized in that**
the plurality of functions corresponding to the plurality of measurement types are stored in a memory of the meter.

2. The method of claim 1, wherein the plurality of initial aggregation operations corresponding to the plurality of measurement types are stored in a memory of the meter.

3. The method of claim 1 or 2, wherein generating the requested measurement data from the raw data comprises:
selecting a measurement type from the plurality of measurement types based on the requested measurement data; and
performing, at the meter, the initial aggregation operation corresponding to the selected measurement type on the raw data to determine the base data.

4. The method of any one of claims 1 to 3, comprising storing the base data in the memory of the meter.

5. The method of any one of claims 1 to 4, wherein generating the requested measurement data from the raw data comprises:
using the one or more functions corresponding to the selected measurement type to derive, at the meter, the measurement data from the base data; and
transmitting the derived measurement data from the meter to head end equipment located remotely from the meter.

6. The method of any preceding claim, wherein the initial aggregation operation comprises:
averaging the raw data over an aggregation time interval;
integrating the raw data over an aggregation time interval;
selecting an instantaneous raw data value, for example an instantaneous raw data value at the end of an aggregation time interval; or
determining a count of events derived from the raw data over an aggregation time interval.

7. The method of any preceding claim, wherein the raw data comprises raw time-series data, the base data comprises base time-series data, and the measurement data comprises measurement time-series data.

8. The method of claim 7, wherein the raw time-series data comprises one or more arrays of raw time-value pairs, the base time-series data comprises one or more arrays of base time-value pairs, and the measurement time-series data comprises one or more arrays of measurement time-value pairs.

9. The method of any preceding claim, wherein each of the one or more functions which operate on the base data to generate the measurement data comprises a time-series function.

10. The method of any one of claims 1 to 5, comprising publicizing or indicating to a user of the meter and/or of the head end equipment the plurality of different measurement types of the known measurement functionality of the meter to allow the user to select which measurement type should be used to derive the measurement data from the raw data measured by the meter.

11. The method of any preceding claim, wherein the measurement functionality of the meter comprises a plurality of different measurement types supported by the meter, each measurement type comprising a corresponding measurement point, a corresponding unit of measure, a corresponding data type, and a corresponding measurement type name, wherein the corresponding measurement point defines the corresponding measurement location, the corresponding unit of measure defines the corresponding unit of measure for the measurement data, and the corresponding data type defines a corresponding transformation for generating the measurement data from the raw data, and wherein the corresponding measurement type name is composed from a name associated with the corresponding measurement point, a name associated with the corresponding unit of measure, and a name associated with the corresponding data type,
wherein receiving the request for measurement data comprises receiving a request for measurement data of a desired measurement type name, and
wherein determining whether the measurement data are derivable from the raw data based on the known measurement functionality of the meter comprises comparing the desired measurement type name with each measurement type name of the plurality of measurement type names, and determining that the measurement data are derivable from the raw data in response to determining that the desired measurement type name matches one of the measurement type names.

12. The method of any preceding claim, wherein the measurement functionality of the meter comprises a plurality of different codes of a metrology specification, each code composed from the values of code attributes associated with the corresponding measurement point, the corresponding unit of measure, and the corresponding data type,
wherein receiving the request for measurement data comprises receiving a request for measurement data of a desired metrology specification code,
wherein determining whether the measurement data are derivable from the raw data based on a known measurement functionality of the meter comprises comparing the desired metrology specification code with each metrology specification code of the plurality of metrology specification codes, and determining that the measurement data are derivable from the raw data in response to determining that the desired metrology specification code matches one of the metrology specification codes.

13. The method of claim 12,
wherein the metrology specification is the IEC 61968-9 metrology specification and the code of the metrology specification is a reading type code defined according to the IEC 61968-9 metrology specification,
wherein the metrology specification is the ANSI C12.19 metrology specification and the code of the metrology specification is a code defined according to a relational table structure of the ANSI C12.19 metrology specification, or
wherein the metrology specification is the COSEM metrology specification and the code of the metrology specification is a class and/or a parameter defined according to the COSEM metrology specification.

14. The method of any preceding claim, wherein the meter is configured to meter, and optionally also to control, the flow of electricity, gas, water or sewage.

## Patentansprüche

1. Verfahren zur Gewinnung von Messdaten von einem Messgerät (4), wobei das Verfahren umfasst:
Verwenden des Messgeräts zum Messen von Rohdaten an einer oder mehreren Messpositionen innerhalb eines Systems (2);
Empfangen einer Anforderung für Messdaten;
Bestimmen, ob die Messdaten basierend auf einer bekannten Messfunktionalität des Messgeräts aus den Rohdaten ableitbar sind; und
als Reaktion auf Bestimmen, dass die angeforderten Messdaten aus den Rohdaten ableitbar sind, Generieren der angeforderten Messdaten aus den Rohdaten,
wobei die bekannte Messfunktionalität des Messgeräts eine Vielzahl von unterschiedlichen Messtypen umfasst, wobei jeder Messtyp einen entsprechenden Datentyp umfasst, welcher eine entsprechende Transformation zum Generieren der Messdaten aus den Rohdaten definiert,
wobei jede Transformation eine entsprechende ursprüngliche Aggregationsoperation und eine oder mehrere entsprechende Funktionen umfasst, wobei die ursprüngliche Aggregationsoperation mit den Rohdaten durchgeführt wird, um Basisdaten zu generieren, und wobei die eine oder mehreren entsprechenden Funktionen mit den Basisdaten operieren, um die Messdaten zu generieren, und
**dadurch gekennzeichnet, dass**
die Vielzahl von Funktionen, welche der Vielzahl von Messtypen entsprechen, im Speicher des Messgeräts gespeichert sind.

2. Verfahren nach Anspruch 1, wobei die Vielzahl von ursprünglichen Aggregationsoperationen, welche der Vielzahl von Messtypen entsprechen, in einem Speicher des Messgeräts gespeichert werden.

3. Verfahren nach Anspruch 1 oder 2, wobei Generieren der angeforderten Messdaten aus den Rohdaten umfasst:
Auswählen eines Messtyps aus der Vielzahl von Messtypen basierend auf den angeforderten Messdaten; und
Durchführen der ursprünglichen Aggregationsoperation entsprechend dem ausgewählten Messtyp mit den Rohdaten an dem Messgerät, um die Basisdaten zu bestimmen.

4. Verfahren nach einem der Ansprüche 1 bis 3, umfassend Speichern der Basisdaten in dem Speicher des Messgeräts.

5. Verfahren nach einem der Ansprüche 1 bis 4, wobei Generieren der angeforderten Messdaten aus den Rohdaten umfasst:
Verwenden der einen oder mehreren dem ausgewählten Messtyp entsprechenden Funktionen, um an dem Messgerät die Messdaten aus den Basisdaten abzuleiten; und
Übertragen der aus dem Messgerät abgeleiteten Messdaten an die Kopfstellenanlage, welche sich entfernt von dem Messgerät befindet.

6. Verfahren nach einem vorstehenden Anspruch, wobei die ursprüngliche Aggregationsoperation umfasst:
Mitteln der Rohdaten über einen Aggregationszeitraum;
Integrieren der Rohdaten über einen Aggregationszeitraum;
Auswählen eines momentanen Rohdatenwerts, zum Beispiel eines momentanen Rohdatenwerts am Ende eines Aggregationszeitraums; oder
Bestimmen einer Anzahl von Ereignissen, welche aus den Rohdaten über einen Aggregationszeitraum abgeleitet werden.

7. Verfahren nach einem vorstehenden Anspruch, wobei die Rohdaten Rohzeitreihendaten umfassen, die Basisdaten Basiszeitreihendaten umfassen, und die Messdaten Messzeitreihendaten umfassen.

8. Verfahren nach Anspruch 7, wobei die Rohzeitreihendaten ein oder mehrere Arrays von Roh-Zeit-Wert-Paaren umfassen, die Basiszeitreihendaten ein oder mehrere Arrays von Basis-Zeit-Wert-Paaren umfassen, und die Messzeitreihendaten ein oder mehrere Arrays von Mess-Zeit-Wert-Paaren umfassen.

9. Verfahren nach einem vorstehenden Anspruch, wobei jede der einen oder mehreren Funktionen, welche mit den Basisdaten operieren, um die Messdaten zu generieren, eine Zeitreihenfunktion umfasst.

10. Verfahren nach einem der Ansprüche 1 bis 5, umfassend Bekanntmachen oder Anzeigen der Vielzahl von unterschiedlichen Messtypen der bekannten Messfunktionalität des Messgeräts gegenüber einem Benutzer des Messgeräts und/oder der Kopfstellenanlage, um dem Benutzer zu erlauben, den jeweiligen Messtyp auszuwählen, der zum Ableiten der Messdaten aus den von dem Messgerät gemessenen Rohdaten verwendet werden soll.

11. Verfahren nach einem vorstehenden Anspruch, wobei die Messfunktionalität des Messgeräts eine Vielzahl von unterschiedlichen Messtypen umfasst, welche von dem Messgerät unterstützt werden, wobei jeder Messtyp einen entsprechenden Messpunkt, eine entsprechende Maßeinheit, einen entsprechenden Datentyp und einen entsprechenden Messtypnamen umfasst, wobei der entsprechende Messpunkt die entsprechende Messposition definiert, die entsprechende Maßeinheit die entsprechende Maßeinheit für die Messdaten definiert, und der entsprechende Datentyp eine entsprechende Transformation zum Generieren der Messdaten aus den Rohdaten definiert, und wobei der entsprechende Messtypname aus einem Namen, welcher dem entsprechenden Messpunkt zugeordnet ist, einem Namen, welcher der entsprechenden Maßeinheit zugeordnet ist, und einem Namen, welcher dem entsprechenden Datentyp zugeordnet ist, zusammengesetzt ist,
wobei Empfangen der Anforderung von Messdaten Empfangen einer Anforderung von Messdaten mit einem gewünschten Messtypnamen umfasst, und
wobei Bestimmen, ob die Messdaten basierend auf der bekannten Messfunktionalität des Messgeräts aus den Rohdaten ableitbar sind, Vergleichen des gewünschten Messtypnamen mit den jeweiligen Messtypnamen der Vielzahl von Messtypnamen, und Bestimmen, dass die Messdaten aus den Rohdaten ableitbar sind, als Reaktion auf Bestimmen, dass der gewünschte Messtypname mit einem der Messtypnamen übereinstimmt, umfasst.

12. Verfahren nach einem vorstehenden Anspruch, wobei die Messfunktionalität des Messgeräts eine Vielzahl von unterschiedlichen Codes einer metrologischen Spezifikation umfasst, wobei jeder Code aus den Werten von Codeattributen besteht, welche dem entsprechenden Messpunkt, der entsprechenden Maßeinheit und dem entsprechenden Datentyp zugeordnet sind,
wobei Empfangen der Anforderung von Messdaten Empfangen einer Anforderung von Messdaten mit einem gewünschten metrologischen Spezifikationscode umfasst,
wobei Bestimmen, ob die Messdaten basierend auf einer bekannten Messfunktionalität des Messgeräts aus den Rohdaten ableitbar sind, Vergleichen des gewünschten metrologischen Spezifikationscodes mit den jeweiligen metrologischen Spezifikationscodes der Vielzahl von metrologischen Spezifikationscodes, und Bestimmen, dass die Messdaten aus den Rohdaten ableitbar sind, als Reaktion auf Bestimmen, dass der gewünschte metrologische Spezifikationscode mit einem der metrologischen Spezifikationscodes übereinstimmt, umfasst.

13. Verfahren nach Anspruch 12,
wobei die metrologische Spezifikation die metrologische Spezifikation IEC 61968-9 ist und der Code der metrologischen Spezifikation ein Lesetypcode ist, welcher gemäß der metrologischen Spezifikation IEC 61968-9 definiert ist,
wobei die metrologische Spezifikation die metrologische Spezifikation ANSI C12.19 ist und der Code der metrologischen Spezifikation ein Code ist, welcher gemäß einer relationalen Tabellenstruktur der metrologischen Spezifikation ANSI C12.19 definiert ist, oder
wobei die metrologische Spezifikation die metrologische Spezifikation COSEM ist und der Code der metrologischen Spezifikation eine Klasse und/oder ein Parameter ist, welche(r) gemäß der metrologischen Spezifikation COSEM definiert ist,

14. Verfahren nach einem vorstehenden Anspruch, wobei das Messgerät dazu konfiguriert ist, den Fluss von Elektrizität, Gas, Wasser oder Abwasser zu messen und optional auch zu steuern.

## Revendications

1. Procédé d'obtention de données de mesure à partir d'un compteur (4), le procédé comprenant :
l'utilisation du compteur pour mesurer des données brutes à un ou plusieurs emplacements de mesure autour d'un système (2) ;
la réception d'une demande de données de mesure ;
la détermination pour établir si les données de mesure peuvent être obtenues des données brutes en fonction d'une fonctionnalité de mesure connue du compteur ; et
en réponse à la détermination que les données de mesure demandées peuvent être obtenues des données brutes, la génération des données de mesure demandées à partir des données brutes,
dans lequel la fonctionnalité de mesure connue du compteur comprend une pluralité de types de mesures différents, dans lequel chaque type de mesure comprend un type de données correspondant définissant une transformation correspondante pour générer les données de mesure à partir des données brutes,
dans lequel chaque transformation comprend une opération d'agrégation initiale correspondante et une ou plusieurs fonctions correspondantes, dans lequel l'opération d'agrégation initiale est effectuée sur les données brutes pour générer des données de base, et dans lequel les une ou plusieurs fonctions correspondantes interviennent sur les données de base pour générer les données de mesure, et
**caractérisé en ce que**
la pluralité de fonctions correspondant à la pluralité de types de mesures sont stockées dans une mémoire du compteur.

2. Procédé selon la revendication 1, dans lequel la pluralité d'opérations d'agrégation initiales correspondant à la pluralité de types de mesure sont stockées dans une mémoire du compteur.

3. Procédé selon la revendication 1 ou 2, dans lequel la génération des données de mesure demandées à partir des données brutes comprend :
la sélection d'un type de mesure parmi la pluralité de types de mesure en fonction des données de mesure demandées ; et
l'exécution, au niveau du compteur, de l'opération d'agrégation initiale correspondant au type de mesure sélectionné sur les données brutes afin de déterminer les données de base.

4. Procédé selon l'une quelconque des revendications 1 à 3, comprenant le stockage des données de base dans la mémoire du compteur.

5. Procédé selon l'une quelconque des revendications 1 à 4, dans lequel la génération des données de mesure demandées à partir des données brutes comprend :
l'utilisation des une ou plusieurs fonctions correspondant au type de mesure sélectionné pour obtenir, au niveau du compteur, les données de mesure à partir des données de base ; et
la transmission des données de mesure obtenues du compteur à un équipement de tête de réseau situé à distance du compteur.

6. Procédé selon une quelconque revendication précédente, dans lequel l'opération d'agrégation initiale comprend :
le calcul de la moyenne des données brutes sur un intervalle de temps d'agrégation ;
l'intégration des données brutes sur un intervalle de temps d'agrégation ;
la sélection d'une valeur de données brutes instantanée, par exemple une valeur de données brutes instantanée à la fin d'un intervalle de temps d'agrégation ; ou
la détermination du nombre d'événements issus des données brutes sur un intervalle de temps d'agrégation.

7. Procédé selon une quelconque revendication précédente, dans lequel les données brutes comprennent des données brutes chronologiques, les données de base comprennent des données de base chronologiques et les données de mesure comprennent des données de mesure chronologiques.

8. Procédé selon la revendication 7, dans lequel les données brutes chronologiques comprennent un ou plusieurs tableaux de paires de valeurs brutes chronologiques, les données de base chronologiques comprennent un ou plusieurs tableaux de paires de valeurs de base chronologiques et les données de mesure chronologiques comprennent un ou plusieurs tableaux de paires de valeurs de mesure chronologiques.

9. Procédé selon une quelconque revendication précédente, dans lequel chacune des une ou plusieurs fonctions qui interviennent sur les données de base pour générer les données de mesure comprennent une fonction chronologique.

10. Procédé selon l'une quelconque des revendications 1 à 5, comprenant la diffusion ou l'indication à un utilisateur du compteur et/ou de l'équipement de tête de réseau, de la pluralité des différents types de mesures de la fonctionnalité de mesure connue du compteur pour permettre à l'utilisateur de sélectionner le type de mesure à utiliser pour obtenir les données de mesure à partir des données brutes mesurées par le compteur.

11. Procédé selon une quelconque revendication précédente, dans lequel la fonctionnalité de mesure du compteur comprend une pluralité de types de mesure différents pris en charge par le compteur, chaque type de mesure comprenant un point de mesure correspondant, une unité de mesure correspondante, un type de données correspondant et un nom de type de mesure correspondant, dans lequel le point de mesure correspondant définit l'emplacement de mesure correspondant, l'unité de mesure correspondante définit l'unité de mesure correspondante pour les données de mesure et le type de données correspondant définit une transformation correspondante pour générer les données de mesure à partir des données brutes, et dans lequel le nom de type de mesure correspondant est composé d'un nom associé au point de mesure correspondant, d'un nom associé à l'unité de mesure correspondante et d'un nom associé au type de données correspondant,
dans lequel la réception de la demande de données de mesure comprend la réception d'une demande de données de mesure d'un nom de type de mesure souhaité, et
dans lequel la détermination pour établir si les données de mesure peuvent être obtenues des données brutes sur la base de la fonctionnalité de mesure connue du compteur comprend la comparaison du nom de type de mesure souhaité avec chaque nom de type de mesure de la pluralité de noms de types de mesure, et la détermination que les données de mesure peuvent être obtenues des données brutes en réponse à la détermination que le nom de type de mesure souhaité correspond à l'un des noms de types de mesure.

12. Procédé selon une quelconque revendication précédente, dans lequel la fonctionnalité de mesure du compteur comprend une pluralité de codes différents d'une spécification métrologique, chaque code étant composé des valeurs des attributs de code associés au point de mesure correspondant, à l'unité de mesure correspondante et au type de données correspondant,
dans lequel la réception de la demande de données de mesure comprend la réception d'une demande de données de mesure d'un code de spécification métrologique souhaité,
dans lequel la détermination pour établir si les données de mesure peuvent être obtenues des données brutes sur la base d'une fonctionnalité de mesure connue du compteur comprend la comparaison du code de spécification métrologique souhaité avec chaque code de spécification métrologique de la pluralité de codes de spécification métrologique, et la détermination que les données de mesure peuvent être obtenues des données brutes en réponse à la détermination que le code de spécification métrologique souhaité correspond à l'un des codes de spécification métrologique.

13. Procédé selon la revendication 12,
dans lequel la spécification métrologique est la spécification métrologique CEI 61968-9 et le code de la spécification métrologique est un code de type de lecture défini conformément à la spécification métrologique CEI 61968-9,
dans lequel la spécification métrologique est la spécification métrologique ANSI C12.19 et le code de la spécification métrologique est un code défini selon une structure de table relationnelle de la spécification métrologique ANSI C12.19, ou
dans lequel la spécification métrologique est la spécification métrologique COSEM et le code de la spécification métrologique est une classe et/ou un paramètre définis selon la spécification métrologique COSEM.

14. Procédé selon une quelconque revendication précédente, dans lequel le compteur est configuré pour mesurer, et éventuellement aussi pour commander, la circulation de l'électricité et les débits de gaz, d'eau ou d'eaux usées.
